# EUROPEAN PATENT SPECIFICATION

(11) **EP 2 339 729 B1**
(45) Date of publication and mention of the grant of the patent: **16.08.2017**
(21) Application number: 09180265.2
(22) Date of filing: 22.12.2009
(51) Int. Cl.: H02M 3/158, H02M 7/493, G06F 1/26

(54) **CIRCUIT SYSTEM AND CONTROL METHOD THEREOF**
SCHALTSYSTEM UND STEUERUNGSVERFAHREN DAFÜR
SYSTÈME DE CIRCUIT ET SON PROCÉDÉ DE CONTRÔLE

(43) Date of publication of application: 29.06.2011
(73) Proprietor: Giga-Byte Technology Co., Ltd., New Taipei City 231 (TW)
(72) Inventor: Lin, Hou-Yuan, New Taipei City 231 (TW); Chen, Chen-Shun, New Taipei City 231 (TW); Liao, Tse-Hsine, New Taipei City 231 (TW)
(74) Representative: Becker Kurig Straus

(56) References cited:
- EP-A1- 2 273 664
- US-A- 5 450 309
- US-A1- 2008 093 933
- US-A1- 2009 295 357
- US-B1- 6 473 280
- US-B2- 6 628 013

## Description

### BACKGROUND OF THE INVENTION

### Field of the Invention

This application relates in general to a circuit system and in particular to a circuit system having PWM units.

### Description of the Related Art

Conventional computer motherboards usually comprise multiphase Pulse Width Modulation (PWM) devices, such as 1-phase 2-phase, 3-phase, 4-phase, 5-phase, 6-phase, 7-phase, 8-phase or more than 8-phase PWM controllers. Since the PWM devices have limited operating life, breakdown of the PWM devices after long term usage may lead to breakdown of computer operating systems. For example, US 2009/295357 deals with improving efficiency of a multi-phase voltage regulator module having a plurality of PWM devices when operated in a light load, and US 2008/093933 discloses a technique for providing redundant voltage regulation. Both prior arts are directed to improve the power management efficiency of a computing system. Hence, extending operating life of the PWM devices and preventing breakdown of motherboard systems have become critical issues in the related fields.

### BRIEF SUMMARY OF INVENTION

The application provides a circuit system, including a processing unit, a control unit electrically connected to the processing unit, and a plurality of PWM units electrically connected to the control unit. The processing unit transmits a control signal to the control unit according to a load current value of the circuit system, and the control unit enables at least one of the PWM units according to the control signal.

### BRIEF DESCRIPTION OF DRAWINGS

The invention can be more fully understood by reading the subsequent detailed description and examples with references made to the accompanying drawings, wherein:
FIG. 1 is a perspective diagram of a circuit system according to an embodiment of the invention; and
FIG. 2 is a perspective diagram illustrating a control method of a circuit system according to an embodiment of the invention.

### DETAILED DESCRIPTION OF INVENTION

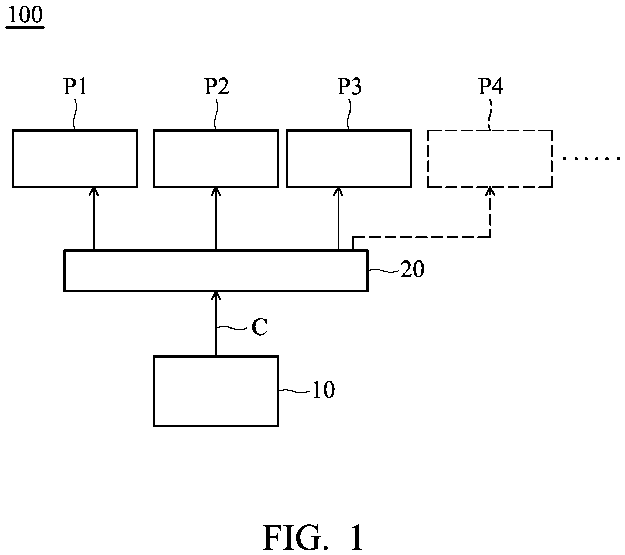

Referring to FIG. 1, an embodiment of a circuit system 100 is disposed in a computer motherboard and primarily comprises a first PWM unit P1, a second PWM unit P2, a third PWM unit P3, a processing unit 10, and a control unit 20, wherein the PWM units P1-P3 and the processing unit 10 are electrically connected to the control unit 20. The processing unit 10 can transmit a control signal C to the control unit 20 according to a load current value of the circuit system 100. Subsequently, the control unit 20 enables at least one of the three PWM units P1∼P3 according to the control signal C. In some embodiments, the processing unit 10 and the control unit 20 may comprise two independent ICs or be integrated into a single IC device.

As shown in FIG. 1, there are three PWM units P1-P3 in the circuit system 100. However, the circuit system 100 may comprise two or more than two PWM units when practically applied. For example, the circuit system 100 of FIG. 1 may comprise only the PWM units P1 and P2. In addition to the PWM units P1 and P2, the circuit system 100 may further comprise the PWM units P3 and P4 or more.

When the load current value of the circuit system 100 exceeds a predetermined value, the control unit 20 may enable a plurality of PWM units to share the load current, and spread the load current among each PWM unit. In some embodiments, the plurality of PWM units can comprise a multiphase PWM module. For example, two 2-phase PWM units may be incorporated with each other as a 4-phase PWM module, and two 6-phase PWM units may be incorporated with each other as a 12-phase PWM module, and so on.

Additionally, the control unit 20 may enable the PWM units P1-P3 for a designated period in turn to prevent breakdown during long term usage thereof. Furthermore, the PWM units P1-P3 can also be randomly enabled. In this embodiment, the control unit 20 enables the first PWM unit P1 and disables the second PWM unit P2 when the computer is started. On the contrary, the control unit 20 enables the second PWM unit P2 and disables the first PWM unit P1 when the computer is restarted or rebooted. Thus, since every time the computer is started, different PWM units are enabled, load current and operating time for each PWM unit are efficiently allocated to extend life of usage.

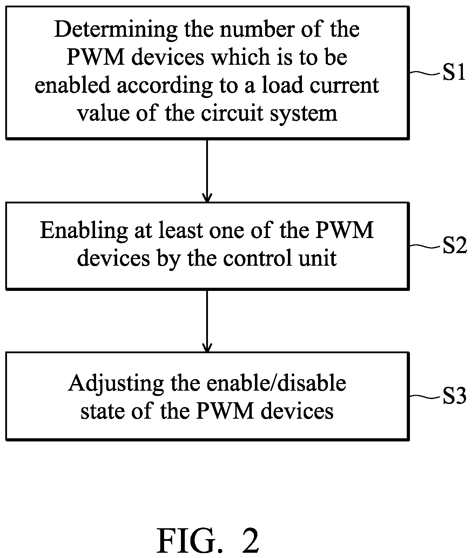

FIG. 2 illustrates a control method in accordance with the circuit system 100 of FIG. 1. The first step S1 of the control method is to determine the number of the PWM devices which is to be enabled according to a load current value of the circuit system 100. For example, if the load current value is low, it may be adequate to apply only one PWM unit to maintain functionality of the circuit system 100. However, if the load current value is high, two or more PWM units may be applied to share the load current. In the step S2, at least one of the PWM devices P1-P3 is enabled by the control unit 20. The control unit 20 can select and enable at least one of the PWM devices P1-P3 according to the number of the PWM devices given by the step S1. The control unit 20 can further adjust the enable/disable state of the PWM devices P1-P3 (step S3); so as to evenly distribute the load current and operating time of the PWM devices P1-P3 to extend life of usage.

In this embodiment, the PWM devices may be selected and enabled by random. Additionally, when a PWM device breaks down during usage, the control unit 20 may disable the PWM device that broke down and enable another PWM device to replace the broken down PWM device. For example, when the first PWM device P1 breaks down, the control unit 20 disables the first PWM device P1 and enables the second PWM device P2 to replace the first PWM device P1. In some embodiments, when the first and second PWM devices P1 and P2 both breakdown, the control unit 20 may disable the first and second PWM devices P1 and P2 and enable the third PWM device P3 to maintain functionality of the circuit system.

The application provides a circuit system and control method thereof. The circuit system comprises at least two PWM units which are enabled in turn or by random, so as to evenly distribute the load current and operating time for each PWM unit. When a PWM device breaks down during usage, another PWM device can be enabled to replace the broken down PWM device to maintain functionality of the circuit system. Thus, for PWM units and motherboards, unneeded maintenance and repair work can be prevented, and extension of operating life can be achieved.

## Claims

1. A circuit system (100) disposed in a computer motherboard, comprising:
a processing unit (10);
a control unit (20), electrically connected to the processing unit (10), wherein the processing unit (10) transmits a control signal to the control unit (20) according to a load current value of the circuit system (100); the control unit (20) determining the number of the PWM units which are to be enabled according to the control signal;
a first PWM unit (P1), electrically connected to the control unit (20); and
a second PWM unit (P2), electrically connected to the control unit (20);
wherein the circuit system (100) is **characterized in that**: the control unit (20) alternatively enables the first and second PWM units (P1 and P2) for a designated period, the first and second PWM units (P1, P2) are incorporated with each other as a multiphase PWM module, and when one of the first and second PWM units (P1, P2) breaks down the control unit (20) disables broken down PWM unit, wherein the control unit (20) enables the first PWM unit (P1) and disables the second PWM unit (P2) when the computer is started, and the control unit (20) enables the second PWM unit (P2) and disables the first PWM unit (P1) when the computer is restarted or rebooted.

2. The circuit system as claimed in claim 1, wherein the circuit system (100) further comprises a third PWM unit (P3) electrically connected to the control unit (20), and the control unit (20) enables the third PWM unit (P3) according to the control signal.

3. The circuit system as claimed in claim 2, wherein the control unit (20) alternatively enables the first, second and third PWM units (P1, P2, and P3) for a designated period.

4. The circuit system as claimed in claim 2, wherein when any one of the first, second and third PWM units (P1, P2, and P3) breaks down, the control unit (20) disables the broken down PWM unit.

5. A control method of a circuit system, wherein the circuit system (100) comprises a control unit (20) and a first PWM unit (P1) and a second PWM unit (P2) electrically connected to the control unit (20), and the method is **characterized by** comprising :
determining the number of the PWM units which are to be enabled according to a load current value of the circuit system (100); and
alternatively enabling the first and second PWM units (P1, P2) by the control unit for a designated period, wherein the first and second PWM units (P1, P2) are incorporated with each other as a multiphase PWM module; and
when one of the first and second PWM units (P1, P2) breaks down the control unit (20) disabling the broken down PWM unit, wherein the control unit (20) enables the first PWM unit (P1) and disable the second PWM unit (P2) when the computer is started, and the control unit (20) enables the second PWM unit (P2) and disables the first PWM unit (P1) when the computer is restarted or rebooted.

6. The method as claimed in claim 5, wherein the circuit system (100) further comprises a third PWM unit (P3) electrically connected to the control unit (20), and the control unit (20) enables the third PWM units (P3) according to the control signal.

7. The method as claimed in claim 6, wherein the control unit (20) enables the first, second and third PWM units (P1, P2, and P3) for a designated period in turn.

8. The method as claimed in claim 6, wherein when any one of the first, second and third PWM units (P1, P2, and P3) breaks down, the control unit (20) disables the broken down PWM unit.

## Patentansprüche

1. Schaltkreissystem (100), das in einer Hauptplatine eines Computers angeordnet ist, umfassend:
eine Verarbeitungseinheit (10);
eine Steuereinheit (20), die elektrisch mit der Verarbeitungseinheit (10) verbundenen ist, wobei die Verarbeitungseinheit (10) gemäß einem Laststromwert des Schaltkreissystems (100) ein Steuersignal an die Steuereinheit (20) überträgt; wobei die Steuereinheit (20) die Anzahl von PWM-Einheiten gemäß dem Steuerungssignal bestimmt, die aktiviert werden sollen;
eine erste PWM-Einheit (P1), die elektrisch mit der Steuereinheit (20) verbunden ist; und
eine zweite PWM-Einheit (P2), die elektrisch mit der Steuereinheit (20) verbunden ist;
wobei das Schaltkreissystem (100) **dadurch gekennzeichnet ist, dass**: die Steuereinheit (20) alternativ die erste und die zweite PWM-Einheit (P1 und P2) für eine bestimmte Periode aktiviert, wobei die erste und die zweite PWM-Einheit (P1, P2) miteinander integriert sind als ein Mehrphasen-PWM-Modul, und wenn eine der ersten und zweiten PWM-Einheiten (P1, P2) ausfällt, deaktiviert die Steuereinheit (20) eine ausgefallene PWM-Einheit, wobei die Steuereinheit (20) die erste PWM-Einheit (P1) aktiviert und die zweite PWM-Einheit (P2) deaktiviert, wenn der Computer gestartet wird und die Steuereinheit (20) die zweite PWM-Einheit (P2) aktiviert und die erste PWM-Einheit (P1) deaktiviert, wenn der Computer neu gestartet oder neu gebootet wird.

2. Schaltkreissystem gemäß Anspruch 1, wobei das Schaltkreissystem (100) ferner eine mit der Steuereinheit (20) elektrisch verbundene dritte PWM-Einheit (P3) aufweist und die Steuereinheit (20) die dritte PWM-Einheit (P3) gemäß dem Steuersignal aktiviert.

3. Schaltkreissystem gemäß Anspruch 2, wobei die Steuereinheit (20) alternativ die erste, zweite und dritte PWM-Einheit (P1, P2 und P3) für eine bestimmte Periode aktiviert.

4. Schaltkreissystem gemäß Anspruch 2, wobei wenn eine von der ersten, zweiten und dritten PWM-Einheit (P1, P2 und P3) ausfällt, die Steuereinheit (20) die ausgefallene PWM-Einheit deaktiviert.

5. Steuerungsverfahren eines Schaltkreissystems, wobei das Schaltkreissystem (100) eine Steuereinheit (20) und eine erste PWM-Einheit (P1) und eine zweite PWM-Einheit (P2) umfasst, die elektrisch mit der Steuereinheit (20) verbunden sind, und wobei das Verfahren **dadurch gekennzeichnet ist, dass** es umfasst:
Bestimmen der Anzahl der PWM-Einheiten, die gemäß einem Laststromwert des Schaltkreissystems (100) aktiviert werden sollen; und
alternativ Aktivieren der ersten und der zweiten PWM-Einheit (P1, P2) durch die Steuereinheit für eine bestimmte Periode, wobei die erste und die zweite PWM-Einheit (P1, P2) als ein Mehrphasen-PWM-Modul miteinander integriert sind; und
wenn eine der ersten und der zweiten PWM-Einheit (P1, P2) ausfällt, Deaktivieren durch die Steuereinheit (20) der ausgefallenen PWM-Einheit, wobei die Steuereinheit (20) die erste PWM-Einheit (P1) aktiviert und die zweite PWM-Einheit (P2) deaktiviert, wenn der Computer gestartet wird und die Steuereinheit (20) die zweite PWM-Einheit (P2) aktiviert und die erste PWM-Einheit (P1) deaktiviert, wenn der Computer neu gestartet oder neu gebootet wird.

6. Verfahren gemäß Anspruch 5, wobei das Schaltkreissystem (100) ferner eine mit der Steuereinheit (20) elektrisch verbundene dritte PWM-Einheit (P3) aufweist und die Steuereinheit (20) die dritten PWM-Einheiten (P3) gemäß dem Steuersignal aktiviert.

7. Verfahren gemäß Anspruch 6, wobei die Steuereinheit (20) der Reihe nach die erste, zweite und dritte PWM-Einheit (P1, P2 und P3) für eine bestimmte Periode aktiviert.

8. Verfahren gemäß Anspruch 6, wobei wenn irgendeine der von der ersten, zweiten und dritten PWM-Einheit (P1, P2 und P3) ausfällt, die Steuereinheit (20) die ausgefallene PWM-Einheit deaktiviert.

## Revendications

1. Système de circuit (100) disposé dans une carte mère d'ordinateur, comprenant ;
une unité de traitement (10) ;
une unité de commande (20) électriquement reliée à l'unité de traitement (10), l'unité de traitement (10) transmettant un signal de commande à l'unité de commande (20) en fonction d'une valeur de courant de charge du système de circuit (100) ;
l'unité de commande (20) déterminant le nombre d'unités PWM destinées à être activées en fonction du signal de commande ;
une première unité PWM (P1) électriquement reliée à l'unité de commande (20) ; et
une deuxième unité PWM (P2) électriquement reliée à l'unité de commande (20) ;
dans lequel le système de circuit (100) est **caractérisé en ce que** : l'unité de commande (20) active de façon alternée les première et deuxième unités PWM (P1 et P2) pour une durée déterminée, les première et deuxième unités PWM (P1, P2) sont incorporées l'une dans l'autre sous la forme d'un module PWM à phases multiples, et lorsque l'une parmi les première et deuxième unités PWM (P1, P2) tombe en panne, l'unité de commande (20) désactive l'unité PWM en panne, l'unité de commande (20) activant la première unité PWM (P1) et désactivant la deuxième unité PWM (P2) lors du démarrage de l'ordinateur, et l'unité de commande (20) activant la deuxième unité PWM (P2) et désactivant la première unité PWM (P1) lors du redémarrage ou du réamorçage de l'ordinateur.

2. Système de circuit selon la revendication 1, dans lequel le système de circuit (100) comprend en outre une troisième unité PWM (P3) électriquement reliée à l'unité de commande (20), et l'unité de commande (20) active la troisième unité PWM (P3) en fonction du signal de commande.

3. Système de circuit selon la revendication 2, dans lequel l'unité de commande (20) active de façon alternée les première, deuxième et troisième unités PWM (P1, P2 et P3) pour une durée déterminée.

4. Système de circuit selon la revendication 2, dans lequel, lorsque l'une quelconque parmi la première, la deuxième et la troisième unité PWM (P1, P2 et P3) tombe en panne, l'unité de commande (20) désactive l'unité PWM en panne.

5. Procédé de commande d'un système de circuit, dans lequel le système de circuit (100) comprend une unité de commande (20) et une première unité PWM (P1) et une deuxième unité PWM (P2) électriquement reliées à l'unité de commande (20), et le procédé est **caractérisé en ce qu'**il comprend :
la détermination du nombre d'unités PWM destinées à être activées en fonction d'une valeur de courant de charge du système de circuit (100) ; et
l'activation de façon alternée des première et deuxième unités PWM (P1, P2) par l'unité de commande pour une durée déterminée, les première et deuxième unités PWM (P1, P2) étant incorporées l'une dans l'autre sous la forme d'un module PWM à phases multiples ; et
lorsque l'une parmi les première et deuxième unités PWM (P1, P2) tombe en panne, l'unité de commande (20) désactive l'unité PWM en panne, l'unité de commande (20) activant la première unité PWM (P1) et désactivant la deuxième unité PWM (P2) lors du démarrage de l'ordinateur, et l'unité de commande (20) activant la deuxième unité PWM (P2) et désactivant la première unité PWM (P1) lors du redémarrage ou du réamorçage de l'ordinateur.

6. Procédé selon la revendication 5, dans lequel le système de circuit (100) comprend en outre une troisième unité PWM (P3) électriquement reliée à l'unité de commande (20), et l'unité de commande (20) active la troisième unité PWM (P3) en fonction du signal de commande.

7. Procédé selon la revendication 6, dans lequel l'unité de commande (20) active de façon alternée les première, deuxième et troisième unités PWM (P1, P2 et P3) tour à tour pour une durée déterminée.

8. Procédé selon la revendication 6, dans lequel, lorsque l'une quelconque parmi la première, la deuxième et la troisième unité PWM (P1, P2 et P3) tombe en panne, l'unité de commande (20) désactive l'unité PWM en panne.
